# EUROPEAN PATENT APPLICATION

(11) **EP 4 611 092 A1**
(43) Date of publication of application: **03.09.2025**
(21) Application number: 25152001.1
(22) Date of filing: 15.01.2025
(51) Int. Cl.: H01M 10/052, H01M 10/04, H01M 10/0587, H01M 50/533, H01M 50/536, H01M 50/538

(54) **ELECTRODE ASSEMBLY, METHOD FOR FABRICATING ELECTRODE ASSEMBLY, AND SECONDARY BATTERY INCLUDING ELECTRODE ASSEMBLY**

(30) Priority: 16.02.2024 KR 20240022527
(71) Applicant: SAMSUNG SDI CO., LTD., Yongin-si, Gyeonggi-do 17084 (KR)
(72) Inventor: Moon, Boo Kyoung, 16678 Suwon-si, Gyeonggi-do (KR)
(74) Representative: Gulde & Partner

(57) **Abstract**

An electrode assembly, a method for fabricating the electrode assembly, and a secondary battery including the electrode assembly are disclosed. An electrode assembly includes a pair of electrode plates, a separator between the pair of electrode plates, and an electrode tab including a plurality of conductive wires arranged side by side in a width direction, and each of the plurality of conductive wires includes an overlapping part that overlaps an electrode plate of the pair of electrode plates to be bonded to the electrode plate, and a protruding part connected to the overlapping part and protruding to an outside at a boundary of the electrode plates.

## Description

### BACKGROUND

### 1. Field

Aspects of embodiments of the present disclosure relate to an electrode assembly, a method for fabricating the electrode assembly, and a secondary battery including the electrode assembly.

### 2. Description of the Related Art

Generally, as the demand for portable electronic products, such as notebook computers, video cameras, and mobile phones, has rapidly increased and the commercialization of robots, electric vehicles, and the like has been accelerated, research on high-performance secondary batteries allowing repeated charging and discharging is actively underway.

In cylindrical secondary batteries among the secondary batteries, an electrode assembly wound in a jelly roll shape may be accommodated in a cylindrical case. The jelly-roll shaped electrode assembly includes a strip-shaped electrode tab attached to an electrode plate.

However, the thin electrode plate may be bent as the electrode assembly is wound, and pressed by an edge of an electrode tab. In addition, during repeated charging and discharging of the secondary battery, the electrode plate may swell and may be cracked by the edge of the electrode tab. The crack formed on the electrode plate may grow during repeated charging and discharging processes, thereby shortening the lifespan of the secondary battery.

The above information disclosed in this Background section is provided for enhancement of understanding of the background of the present disclosure, and, therefore, may contain information that does not constitute related (or prior) art.

### SUMMARY

According to aspects of embodiments of the present disclosure, an electrode assembly in which damage is suppressed, a method for fabricating the electrode assembly, and a secondary battery including the electrode assembly are provided.

These and other aspects and features of the present disclosure will be described in or will be apparent from the following description of some embodiments of the present disclosure.

According to one or more embodiments of the present disclosure, an electrode assembly includes a pair of electrode plates, a separator between the pair of electrode plates, and an electrode tab including a plurality of conductive wires arranged side by side in a width direction, wherein each of the plurality of conductive wires includes an overlapping part that overlaps an electrode plate of the pair of electrode plates to be bonded to the electrode plate, and a protruding part connected to the overlapping part and protruding to an outside at a boundary of the electrode plates.

The pair of electrode plates may include a positive electrode plate and a negative electrode plate having opposite polarities, and the overlapping part may be bonded to the positive electrode plate.

Each of the electrode plates may include a substrate and an active material applied to the substrate, and the overlapping part may be bonded to an uncoated region of the electrode plate, to which the active material is not applied.

The pair of electrode plates and the separator may be wound around a winding axis, each of the electrode plates may include an inner side surface facing the winding axis and an outer side surface opposite to the winding axis, and the electrode may be bonded to the inner side surface.

The conductive wire may extend along a path that is longer than a shortest distance between a first side end and a second side end in a longitudinal direction.

The conductive wire may extend along a wave path.

The overlapping part may include a welding part welded to the electrode plate, and a free part not welded to the electrode plate.

The electrode tab may further include a reinforcing thin plate bonded to the plurality of conductive wires and not bonded to the electrode plate.

All of the conductive wires may be bonded to the reinforcing thin plate.

Some of the plurality of conductive wires may not be bonded to the electrode plate.

A cross-sectional shape of the conductive wires may be a circular shape.

The conductive wires may be made of aluminum or an aluminum alloy.

According to one or more embodiments of the present disclosure, a method for fabricating an electrode assembly includes preparing an electrode tab, in which the electrode tab including a plurality of conductive wires arranged side by side in a width direction is prepared, overlapping the electrode tab, in which a part of the electrode tab in a longitudinal direction is placed to overlap an electrode plate, and welding the electrode tab, in which the part of the electrode tab is welded to the electrode plate.

The preparing of the electrode tab may include overlapping the conductive wire, in which the plurality of conductive wires are arranged side by side in the width direction and placed to overlap a reinforcing thin plate, and welding the conductive wire, in which the conductive wires are welded to the reinforcing thin plate.

The overlapping of the electrode tab may include placing the electrode tab on the electrode plate such that the plurality of conductive wires face the electrode plate and the plurality of conductive wires are arranged between the reinforcing thin plate and the electrode plate, and the welding of the electrode tab may include welding the conductive wires to the electrode plate while the reinforcing thin plate is spaced apart from the electrode plate.

In the welding of the conductive wire, all of the conductive wires may be bonded to the reinforcing thin plate, and in the welding of the electrode tab, some of the plurality of conductive wires may not be bonded to the electrode plate.

The welding of the electrode tab may include welding the conductive wires to the electrode plate with energy of ultrasonic vibrations.

According to one or more embodiments of the present disclosure, a secondary battery includes a case, and an electrode assembly according to an embodiment of the present disclosure inserted in the case.

The case may include a cylindrical can having a side open and the electrode assembly inserted therein, and a cap assembly arranged to face the open side of the can.

The electrode assembly may be wound in a jelly roll shape and accommodated inside the case.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings.
FIG. 1 is a perspective view schematically illustrating a configuration of a secondary battery according to one or more embodiments of the present disclosure;
FIG. 2 is a longitudinal cross-sectional view schematically illustrating a configuration of the secondary battery of FIG. 1;
FIG. 3 is a cross-sectional view schematically illustrating a configuration of an electrode assembly according to an embodiment of the present disclosure wound in a jelly roll shape;
FIG. 4 is a perspective view illustrating an example of an electrode tab included in the electrode assembly of the present disclosure;
FIG. 5 is an enlarged plan view of the electrode tab of FIG. 4 and a part of an electrode plate to which the electrode tab is attached;
FIG. 6 is an enlarged cross-sectional view of a part of the electrode assembly according to an embodiment of the present disclosure wound in a jelly roll shape;
FIG. 7 is a perspective view illustrating another example of the electrode tab included in the electrode assembly of the present disclosure;
FIG. 8 is an enlarged plan view of the electrode tab of FIG. 7 and a part of the electrode plate to which the electrode tab is attached;
FIG. 9 is an enlarged cross-sectional view of a part of an electrode assembly according to another embodiment of the present disclosure wound in a jelly roll shape;
FIG. 10 is a perspective view illustrating another example of the electrode tab included in the electrode assembly of the present disclosure;
FIG. 11 is an enlarged plan view of the electrode tab of FIG. 10 and a part of the electrode plate to which the electrode tab is attached;
FIG. 12 is an enlarged cross-sectional view of a part of an electrode assembly according to another embodiment of the present disclosure wound in a jelly roll shape;
FIG. 13 is a flowchart illustrating a method for fabricating the electrode assembly according to an embodiment of the present disclosure; and
FIG. 14 is a flowchart illustrating a method for fabricating the electrode assembly according to another embodiment of the present disclosure

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below may be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

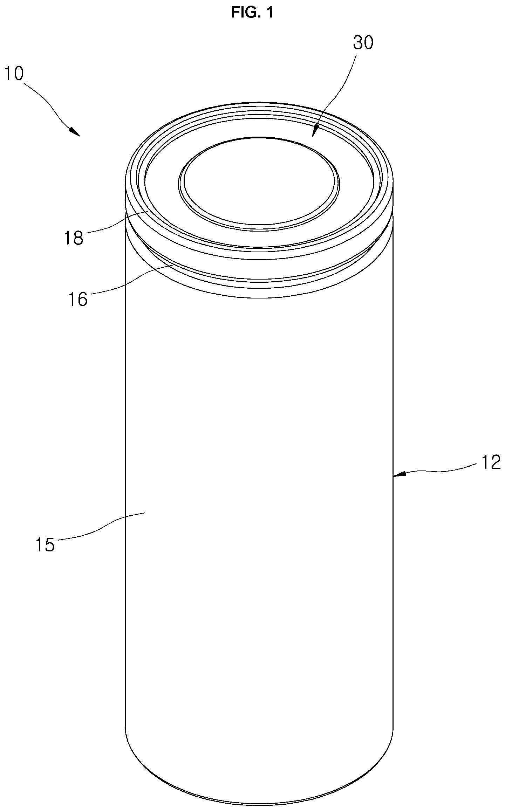

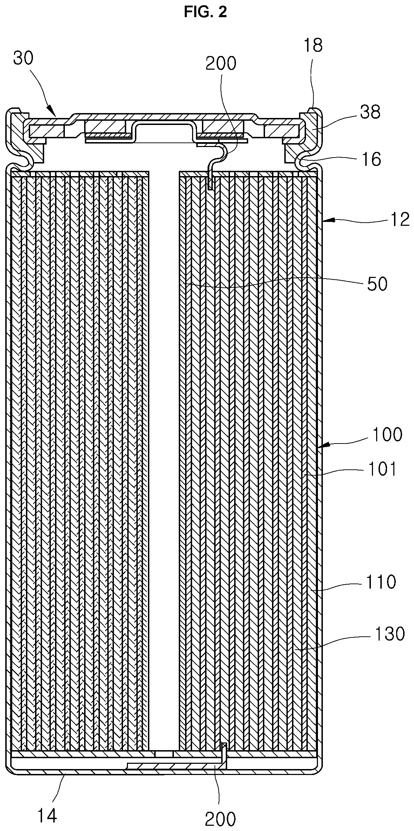

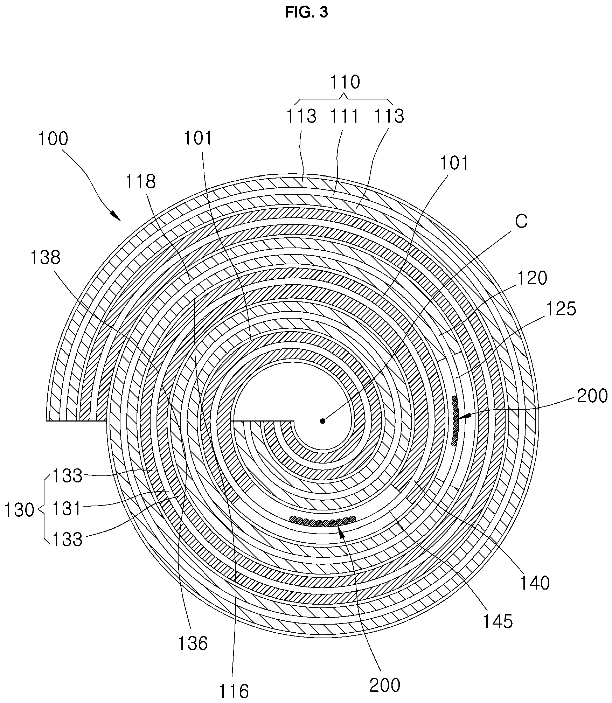

FIG. 1 is a perspective view schematically illustrating a configuration of a secondary battery according to one or more embodiments of the present disclosure; FIG. 2 is a longitudinal cross-sectional view schematically illustrating a configuration of the secondary battery of FIG. 1; and FIG. 3 is a cross-sectional view schematically illustrating a configuration of an electrode assembly according to an embodiment of the present disclosure wound in a jelly roll shape.

Referring to FIGS. 1 to 3, a secondary battery 10 according to an embodiment of the present disclosure may include a case and an electrode assembly 100.

Herein, a case in which the secondary battery 10 is a lithium-ion secondary battery having a cylindrical shape will be described as an example. However, the present disclosure is not limited thereto, and the secondary battery 10 may be a lithium polymer battery or a prismatic battery, for example.

The case may form a schematic exterior of the secondary battery 10 and support (e.g., entirely support) the electrode assembly 100 to be described below. In an embodiment, the case may include a can 12, a cap assembly 30, and a gasket 38.

In an embodiment, the can 12 may have a cylindrical shape. In an embodiment, the can 12 may include a bottom part 14 having a generally circular shape and a cylindrical side wall 15 extending by a length (e.g., a predetermined length) upward from a circumference of the bottom part 14. The can 12 may be formed with a side open. Accordingly, the electrode assembly 100, which will be described below, may be inserted into the can 12 together with an electrolyte during an assembly process of the secondary battery 10. In an embodiment, the can 12 may be provided to be electrically conductive. For example, the can 12 may include at least one material selected from the group consisting of steel, stainless steel, aluminum, and an aluminum alloy.

The cap assembly 30 may be formed to have a generally plate shape and may be disposed to face the open side of the can 12. In an embodiment, the open side of the can 12 may be an upper side of the can 12. In an embodiment, the cap assembly 30 may be provided to be electrically conductive. For example, the cap assembly 30 may include at least one material selected from the group consisting of steel, stainless steel, aluminum, and an aluminum alloy. The cap assembly 30 may include a cap-up, a safety vent, a cap-down, an insulating member, and a sub-plate, but is not limited thereto, and may be modified in various forms.

The gasket 38 may be disposed between the can 12 and the cap assembly 30. The gasket 38 may be formed of an electrically insulating material, such as rubber, silicone, or the like. The gasket 38 may be disposed such that an inner side surface thereof surrounds (e.g., entirely surrounds) a circumferential surface of the cap assembly 30. The inner side surface of the gasket 38 may be fixed to the circumferential surface of the cap assembly 30 by any of various types of coupling methods, such as adhesion, welding, pressing, and the like.

The case may further include a beading part 16 formed to be inwardly recessed from an outer side surface of the can 12, and a crimping part 18 bent and extending from an upper part of the beading part 16.

The beading part 16 may be formed by pressing inward a circumference of an outer circumferential surface of the can 12 at the open side of the can 12. The beading part 16 may be disposed between the cap assembly 30 and the electrode assembly 100. The beading part 16 may prevent or substantially prevent movement of the electrode assembly 100 inside the can 12, and may determine a position in which the cap assembly 30 is seated on the upper side of the can 12.

The crimping part 18 may be bent and extend from an upper part of the beading part 16. An inner side surface of the crimping part 18 may be disposed to surround (e.g., entirely surround) an outer side surface of the gasket 38. The crimping part 18 may press an edge of the cap assembly 30 through the gasket 38 to firmly fix the cap assembly 30 to the can 12.

The electrode assembly 100 may function as a unit structure for performing a power charging and discharging operation in the secondary battery 10.

The electrode assembly 100 may include a pair of electrode plates 110 and 130 overlapping each other, a separator 101, and an electrode tab 200. The pair of electrode plates 110 and 130 may include a positive electrode plate 130 and a negative electrode plate 110.

The positive electrode plate 130 may function as a positive electrode of the electrode assembly 100. The positive electrode plate 130 may be formed in the form of a thin film. A type, size, and shape of the positive electrode plate 130 are not particularly limited as long as the positive electrode plate 130 has conductivity and does not cause chemical changes in the secondary battery 10.

The positive electrode plate 130 may include a positive electrode substrate 131 and a positive electrode active material layer 133 stacked on at least one of both side surfaces of the positive electrode substrate 131. The positive electrode substrate 131 may be, for example, a foil made of a metal material, such as aluminum or an aluminum alloy.

The positive electrode plate 130 may include a positive electrode coated region 140 to which the positive electrode active material layer 133 is applied, and a positive electrode uncoated region 145 to which the positive electrode active material layer 133 is not applied. A plurality of positive electrode coated regions 140 and a plurality of positive electrode uncoated regions 145 may be provided. In an embodiment, the plurality of positive electrode coated regions 140 and the plurality of positive electrode uncoated regions 145 may be alternately disposed in a longitudinal direction of the positive electrode plate 130 in which the positive electrode plate 130 extends.

In an embodiment, the positive electrode active material layer 133 may be applied to both side surfaces of the positive electrode coated region 140, but, alternatively, the positive electrode active material layer 133 may be applied to only one side surface of the positive electrode coated region 140.

The positive electrode active material layer 133 may include a positive electrode active material. The positive electrode active material may include a compound (lithiated intercalation compound) capable of reversibly intercalating and deintercalating lithium. In an embodiment, the positive electrode active material may include one or more types of composite oxides of lithium and a metal selected from cobalt, manganese, nickel, iron, and a combination thereof.

For example, the positive electrode active material may include at least one of lithium-iron-phosphate oxide (LiFePO₄, LFP), lithium-manganese-iron-phosphate oxide (LiMnFePOt, LMFP), and lithium-nickel-cobalt-manganese oxide (LiNiₓCo_{y}Mn_{z}O₂, NCM). Here, conditions of 0<x<1, 0<y<1, 0<z<1, and x+y+z=1 may be satisfied. The positive electrode active material may include any one of LiFePO₄, LiMnFePO₄, and LiNiₓCo_{y}Mn_{z}O₂, and may also include two or all of LiFePOt, LiMnFePOt, and LiNiₓCo_{y}Mn_{z}O₂.

The positive electrode active material layer 133 may further include a positive electrode conductive material. The positive electrode conductive material is used to impart conductivity to the positive electrode active material layer 133, and any suitable electrically conductive material that does not cause a chemical change in the battery may be used. Examples of the positive electrode conductive material may include a carbon-based material, such as natural graphite, artificial graphite, carbon black, acetylene black, ketjen black, carbon fiber, carbon nanofiber, carbon nanotubes, and the like; a metal-based material of a metal powder or metal fiber including copper, nickel, aluminum, silver, and the like; a conductive polymer, such as a polyphenylene derivative; or a mixture thereof.

The positive electrode active material layer 133 may further include a positive electrode binder. The positive electrode binder adheres particles constituting the positive electrode active material to each other well, and may adhere the positive electrode active material to the positive electrode plate 130 well.

Examples of the positive electrode binder may include a non-aqueous binder, an aqueous binder, a dry binder, or a combination thereof. The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluororubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as a positive electrode binder, a cellulose-based compound capable of imparting viscosity may be further included. The cellulose-based compound may include one or more of carboxymethyl cellulose, hydroxypropylmethyl cellulose, methyl cellulose, or alkali metal salts thereof. The alkali metal may include Na, K, or Li.

The dry binder may be a fibrous polymer material, and, for example, polytetrafluoroethylene, polyvinylidene fluoride, a polyvinylidene fluoride-hexafluoropropylene copolymer, polyethylene oxide, or a combination thereof.

The negative electrode plate 110 may function as a negative electrode of the electrode assembly 100. The negative electrode plate 110 may be formed in the form of a thin film. The negative electrode plate 110 may be disposed to be spaced apart from the positive electrode plate 130 by a certain distance to face the positive electrode plate 130. A type, size, and shape of the negative electrode plate 110 are not particularly limited as long as the negative electrode plate 110 has conductivity and does not cause chemical changes in the secondary battery 10.

The negative electrode plate 110 may include a negative electrode substrate 111 and a negative electrode active material layer 113 stacked on at least one of both side surfaces of the negative electrode substrate 111. The negative electrode substrate 111 may be, for example, a foil made of a metal material, such as copper, a copper alloy, nickel, or a nickel alloy.

The negative electrode plate 110 may include a negative electrode coated region 120 to which the negative electrode active material layer 113 is applied, and a negative electrode uncoated region 125 to which the negative electrode active material layer 113 is not applied. A plurality of negative electrode coated regions 120 and a plurality of negative electrode uncoated regions 125 may be provided. In an embodiment, the plurality of negative electrode coated regions 120 and the plurality of negative electrode uncoated regions 125 may be alternately disposed in an extending direction of the negative electrode plate 110 in which the negative electrode plate 110 extends.

In an embodiment, the negative electrode active material layer 113 may be applied to both side surfaces of the negative electrode coated region 120, and, alternatively, may be applied to only one side surface of the negative electrode coated region 120.

The negative electrode active material layer 113 may include a negative electrode active material. The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may be a carbon-based negative electrode active material, and examples thereof may include crystalline carbon, amorphous carbon, or a combination thereof. Examples of the crystalline carbon may include graphite, such as amorphous, plate-shaped, flake-shaped, spherical-shaped or fiber-shaped natural graphite or artificial graphite. Examples of the amorphous carbon may include soft carbon or hard carbon, a mesophase pitch carbonized product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (0<x<2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on a surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or the Sn-based negative electrode active material may be used by being mixed with a carbon-based negative electrode active material.

The negative electrode active material layer 113 may further include a negative electrode conductive material and a negative electrode binder. The negative electrode conductive material is used to impart conductivity to the negative electrode active material layer 113, and any electrically conductive material that does not cause a chemical change in the battery may be used. Examples of the negative electrode conductive material include a carbon-based material such as natural graphite, artificial graphite, carbon black, acetylene black, ketjen black, carbon fiber, carbon nanofiber, carbon nanotubes, and the like; a metal-based material of a metal powder or metal fiber including copper, nickel, aluminum, silver, and the like; a conductive polymer such as a polyphenylene derivative; or a mixture thereof.

The negative electrode binder adheres particles constituting the negative electrode active material to each other well, and to adhere the negative electrode active material to the negative electrode plate 110 well. Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from any of styrene-butadiene rubber, (meth)acrylated styrene-butadiene rubber, (meth)acrylonitrile-butadiene rubber, (meth)acrylic rubber, butyl rubber, a fluororubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as a negative electrode binder, a cellulose-based compound capable of imparting viscosity may be further included. The cellulose-based compound may include one or more of carboxymethyl cellulose, hydroxypropylmethyl cellulose, methyl cellulose, or alkali metal salts thereof. In an embodiment, the alkali metal may include Na, K, or Li.

The dry binder may be a fibrous polymer material, and, for example, polytetrafluoroethylene, polyvinylidene fluoride, a polyvinylidene fluoride-hexafluoropropylene copolymer, polyethylene oxide, or a combination thereof.

The separator 101 may be interposed between the pair of electrode plates 110 and 130, that is, between the positive electrode plate 130 and the negative electrode plate 110. The separator 101 may prevent or substantially prevent a short circuit between the positive electrode plate 130 and the negative electrode plate 110 while allowing the movement of lithium ions between the positive electrode plate 130 and the negative electrode plate 110.

In an embodiment, the separator 101 may be made of polyethylene, polypropylene, polyvinylidene fluoride, or a multilayer film of two or more layers thereof, and may be made of a mixed multilayer film, such as, a polyethylene/polypropylene double-layered separator, a polyethylene/polypropylene/polyethylene three-layered separator, and a polypropylene/polyethylene/polypropylene three-layered separator.

The separator 101 may include a porous substrate, and a coating layer including an organic material, an inorganic material, or a combination thereof located on one surface or both surfaces of the porous substrate.

The porous substrate may be a polymer film formed of a polymer, or a copolymer or mixture of two or more selected from polyolefins, such as polyethylene, polypropylene, and the like, a polyester, such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be present by being mixed in one coating layer or may be present in a form in which a coating layer including organic materials and a coating layer including inorganic materials are laminated.

The electrode assembly 100 may have a shape that is wound around a winding axis C. The positive electrode plate 130 and the negative electrode plate 110 may be wound clockwise or counterclockwise around the winding axis C while first surfaces thereof are disposed to face each other. Accordingly, the electrode assembly 100 may have substantially a jelly roll shape. A cross-sectional shape of the electrode assembly 100 may be changed in design into any of various shapes, such as an elliptical shape, a polygonal shape, or the like, in addition to a circular shape as shown in FIG. 3. Here, the winding axis C may be a straight line passing through a central part of the electrode assembly 100 and disposed perpendicular to the open surface of the case.

In an embodiment, a pair of separators 101 may be provided. The pair of separators 101 may be disposed to face both surfaces of the positive electrode plate 130 or the negative electrode plate 110. The pair of separators 101 may be wound around the winding axis C together with the positive electrode plate 130 and the negative electrode plate 110.

The electrode assembly 100 may be disposed in the case, or inside the can 12. The winding axis C of the electrode assembly 100 may be disposed coaxially with a central axis of the can 12. A lower end part and an upper end part of the electrode assembly 100 may be disposed to face the bottom part 14 and the beading part 16 of the can 12, respectively.

In an embodiment, a center pin 50 may be additionally installed inside the electrode assembly 100. The center pin 50 may have the form of a hollow circular pipe. The center pin 50 may be coupled to approximately a center of the electrode assembly 100, and a central axis thereof may be disposed to coincide with the winding axis C of the electrode assembly 100. The center pin 50 may include at least one of materials such as steel, stainless steel, aluminum, an aluminum alloy, or polybutylene terephthalate, for example. The center pin 50 may suppress deformation of the electrode assembly 100 during charging and discharging of the battery, and may function as a moving path for a gas generated inside the secondary battery 10. However, in one or more embodiments, the center pin 21 may be omitted.

The electrode tab 200 may be electrically conductively connected to the electrode plates 110 and 130. The electrode tab 200 electrically connects the case to the electrode assembly 100.

In an embodiment, the electrode tab 200 may extend parallel to the winding axis C of the electrode assembly 100. A side of the electrode tab 200 in a longitudinal direction may be disposed inside the electrode plates 110 and 130, and another side of the electrode tab 200 in the longitudinal direction may protrude to an outside of the electrode assembly 100.

A plurality of electrode tabs 200 may be provided. As an example, a pair of electrode tabs 200 may be provided. A first electrode tab 200 of the pair of electrode tabs 200 is disposed between the positive electrode plate 130 and the separator 101, and both, or opposite, sides of the first electrode tab 200 in the longitudinal direction may be connected to the positive electrode plate 130 and the cap assembly 30.

A second electrode tab 200 of the pair of electrode tabs 200 is disposed between the negative electrode plate 110 and the separator 101, and both, or opposite, sides of the second electrode tab 200 in the longitudinal direction may be connected to the negative electrode plate 110 and the can 12.

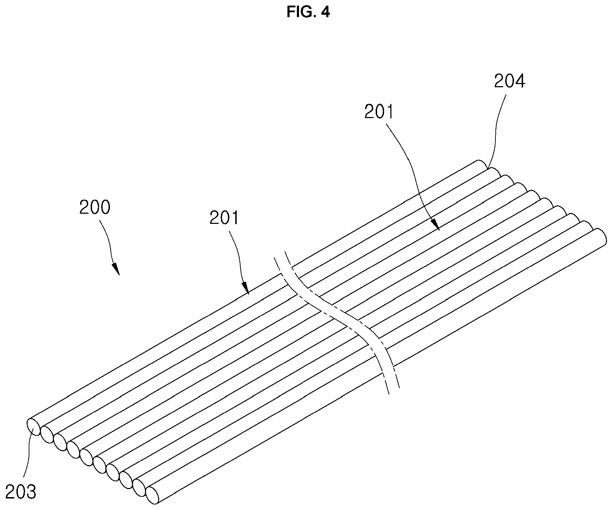

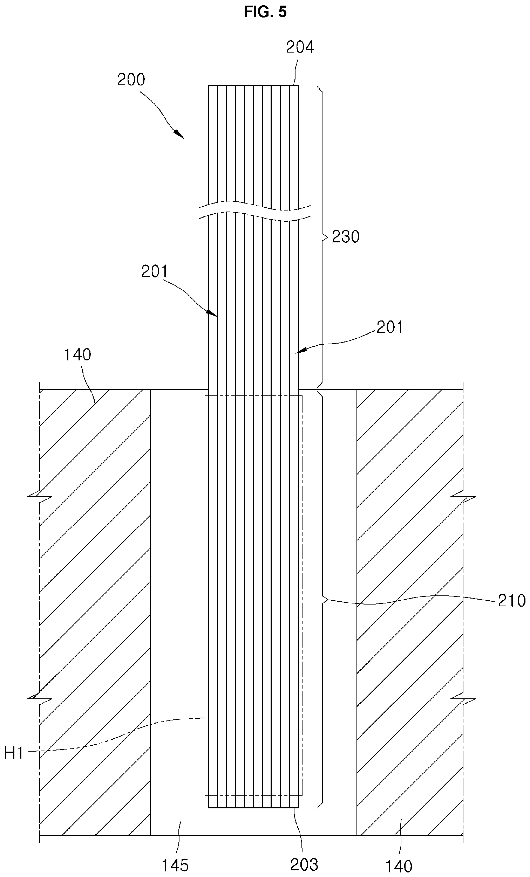

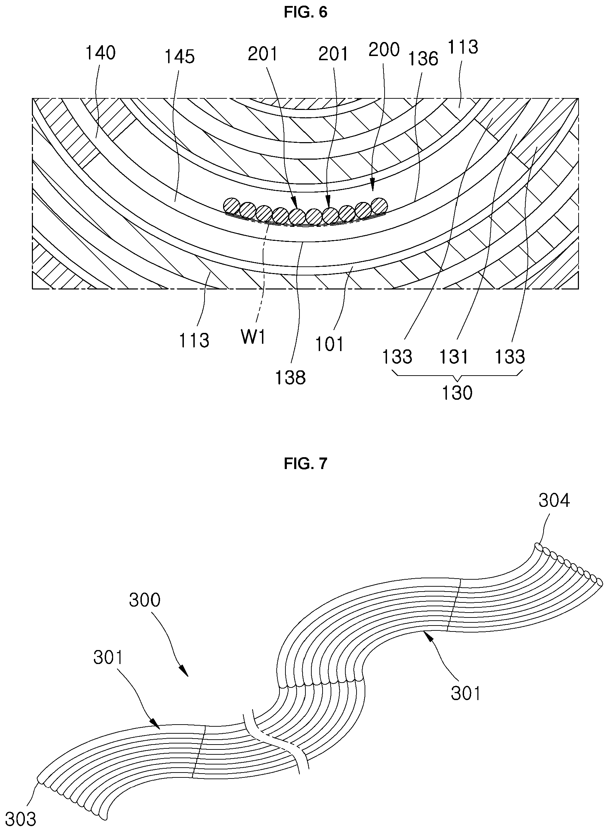

FIG. 4 is a perspective view illustrating an example of the electrode tab included in the electrode assembly of the present disclosure; FIG. 5 is an enlarged plan view of the electrode tab of FIG. 4 and a part of the electrode plate to which the electrode tab is attached; and FIG. 6 is an enlarged cross-sectional view of a part of an electrode assembly according to an embodiment of the present disclosure wound in a jelly roll shape.

Referring to FIGS. 3 to 6, an electrode tab 200 according to an example, which is included in the electrode assembly 100, includes a plurality of conductive wires 201 arranged side by side in a width direction. Herein, a case in which the electrode tab 200 is bonded to the positive electrode plate 130 will be described as an example, but the electrode tab 200 may be similarly applied to the negative electrode plate 110.

The conductive wire 201 may be formed of, for example, an aluminum or aluminum alloy material. However, the conductive wire 201 may also be formed of any of other suitable types of electrically conductive metal materials other than aluminum and an aluminum alloy.

In an embodiment, a cross-sectional shape of the conductive wire 201 may be a circular shape with a constant diameter. However, in another embodiment, the cross-sectional shape of the conductive wire 201 may be a polygonal shape of a pentagon or more sides. The conductive wire 201 may extend in a direction parallel to a longitudinal direction of the winding axis C. The direction parallel to the longitudinal direction of the winding axis C may be a width direction of the positive electrode plate 130 and the negative electrode plate 110.

The plurality of conductive wires 201 may be arranged side by side in the width direction perpendicular to a longitudinal direction thereof. The plurality of conductive wires 201 may be arranged back-to-back such that outer circumferential surfaces thereof are in contact with each other, or may be arranged to be spaced apart from each other such that a fine gap is formed between the adjacent conductive wires 201. The width direction of the conductive wire 201 may be the same as the longitudinal direction of the positive electrode plate 130 and the negative electrode plate 110.

The conductive wire 201 includes an overlapping part 210 that overlaps the electrode plates 110 and 130 to be bonded to the electrode plates 110 and 130, and a protruding part 230 connected to the overlapping part 210 and protruding outward at a boundary of the electrode plates 110 and 130.

The protruding part 230 may be bonded to the cap assembly 30 illustrated in FIGS. 1 and 2, and the protruding part 230 of the electrode tab 200 bonded to the negative electrode plate 110 may be bonded to the bottom part 14 of the can 12.

The overlapping part 210 may be bonded to the positive electrode uncoated region 145 in the positive electrode plate 130.

In an embodiment, the overlapping part 210 may be welded to the positive electrode uncoated region 145. For example, ultrasonic welding may be applied to weld the conductive wire 201 to the positive electrode uncoated region 145 with energy of ultrasonic vibrations.

By placing an ultrasonic horn (not shown) to overlap the overlapping parts 210 of the plurality of conductive wires 201 that overlap the positive electrode uncoated region 145, and applying pressure toward the positive electrode uncoated region 145 while operating the ultrasonic horn, the overlapping parts 210 of the conductive wires 201 may be melted and bonded to the positive electrode uncoated region 145 by energy of ultrasonic vibrations.

Ultrasonic welding using an ultrasonic horn may be advantageous in that the plurality of conductive wires 201 can be concurrently (e.g., simultaneously) welded to the positive electrode uncoated region 145, thereby improving working speed and reducing working costs.

An end part of the ultrasonic horn applied to the welding operation of the electrode tab 200 may have a narrow and long rectangular cross-sectional shape. Thus, in order to concurrently (e.g., simultaneously) weld the plurality of conductive wires 201, a distance between the conductive wire 201 at an outermost side and the conductive wire 201 at another outermost side in a width direction of the conductive wire 201 should be less than or equal to a width of the end part of the ultrasonic horn.

In FIG. 5, a region indicated by a dash-double dotted line and designated by a reference numeral "H1" represents an ultrasonic horn region H1 in which the ultrasonic horn overlaps the plurality of conductive wires 201. In FIG. 6, a region indicated by a dash-double dotted line and designated by a reference numeral "W1" represents a welding part W1 at which the overlapping parts 210 of the plurality of conductive wires 201 and the positive electrode uncoated region 145 are welded.

However, the ultrasonic welding is provided as an example of a method of bonding the conductive wires 201 to the positive electrode uncoated region 145. In another embodiment, the conductive wires 201 may be bonded to the positive electrode uncoated region 145 by another suitable methods, such as attaching the plurality of conductive wires 201 one by one to the positive electrode uncoated region 145 by laser welding.

Each of the conductive wires 201 may extend along a shortest path connecting a first side end 203 and a second side end 204 thereof in the longitudinal direction. In an embodiment, each of the conductive wires 201 may extend along a straight path parallel to each other.

The positive electrode plate 130, the negative electrode plate 110, and the separator 101 may be wound around the winding axis C. Both, or opposite, side surfaces of the positive electrode plate 130 may be divided into a positive electrode inner side surface 136 facing the winding axis C, and a positive electrode outer side surface 138, which is a side surface opposite to the positive electrode inner side surface 136, i.e., opposite to the winding axis C. Both, or opposite, side surfaces of the negative electrode plate 110 may be divided into a negative electrode inner side surface 116 facing the winding axis C, and a negative electrode outer side surface 118, which is a side surface opposite to the negative electrode inner side surface 116, i.e., opposite to the winding axis C.

The electrode tab 200 bonded to the positive electrode plate 130 may be bonded to the positive electrode inner side surface 136 of the positive electrode uncoated region 145. The electrode tab 200 bonded to the negative electrode plate 110 may be bonded to the negative electrode inner side surface 116 of the negative electrode uncoated region 125.

In an embodiment, any conductive wire 201 may not be bonded to another adjacent conductive wire 201.

When the electrode plates 110 and 130 are bent during winding of the electrode assembly 100, or when the electrode plates 110 and 130 are expanded during charging and discharging of the secondary battery 10, in the electrode tab 200, the conductive wires 201 are spaced apart from each other or a gap therebetween is reduced, thereby mitigating stress on the electrode plates 110 and 130 caused by the electrode tab 200.

Further, since the electrode plates 110 and 130 come into contact with and press a curved outer circumferential surface of the conductive wire 201 having a circular or circular-like cross-sectional shape, the stress on the electrode plates 110 and 130 caused by the electrode tab 200 is mitigated. Accordingly, cracking of the electrode plates 110 and 130 due to close contact with the electrode tab 200 may be suppressed, and durability of the secondary battery 10 including the electrode assembly 100 may be improved.

In an embodiment, the electrode tab 200 is illustrated in FIGS. 3 and 6 as being bonded to the positive electrode inner side surface 136 or the negative electrode inner side surface 116, but, in another embodiment, unlike the illustrated configuration, the electrode tab 200 may be bonded to the positive electrode outer side surface 138 or the negative electrode outer side surface 118.

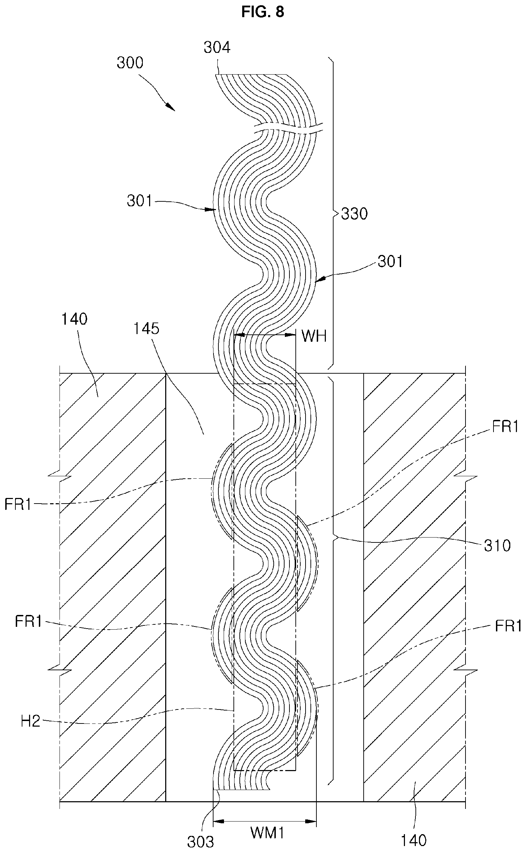

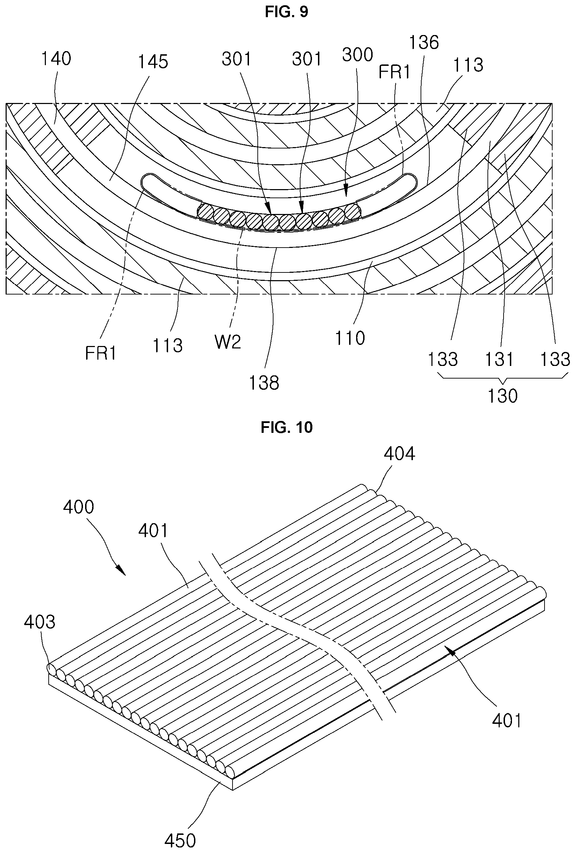

FIG. 7 is a perspective view illustrating another example of the electrode tab included in the electrode assembly of the present disclosure; FIG. 8 is an enlarged plan view of the electrode tab of FIG. 7 and a part of the electrode plate to which the electrode tab is attached; and FIG. 9 is an enlarged cross-sectional view of a part of an electrode assembly according to another embodiment of the present disclosure wound in a jelly roll shape.

Referring to FIGS. 3 and 7 to 9, an electrode tab 300 according to the present example may be included in the electrode assembly 100, rather than the electrode tab 200 according to the example shown in FIGS. 3 and 4. The electrode tab 300 includes a plurality of conductive wires 301 arranged side by side in a width direction thereof. Herein, a case in which the electrode tab 300 is bonded to the positive electrode plate 130 will be described as an example, but the electrode tab 300 may be similarly applied to the negative electrode plate 110.

The conductive wire 301 may be formed of, for example, an aluminum or aluminum alloy material. However, the conductive wire 301 may be formed of another type of electrically conductive metal material, other than aluminum and an aluminum alloy.

In an embodiment, a cross-sectional shape of the conductive wire 301 may be a circular shape with a constant diameter. However, the cross-sectional shape of the conductive wire 301 may be a polygonal shape of a pentagon or more sides.

The plurality of conductive wires 301 may be arranged side by side in the width direction thereof. The plurality of conductive wires 301 may be arranged back-to-back such that outer circumferential surfaces thereof are in contact with each other, or may also be arranged to be spaced apart such that a fine gap is formed between the adjacent conductive wires 301. A width direction of the conductive wire 301 may be the same as a longitudinal direction of the positive electrode plate 130 and the negative electrode plate 110.

The conductive wire 301 includes an overlapping part 310 that overlaps the electrode plates 110 and 130 and is bonded to the electrode plates 110 and 130, and a protruding part 330 connected to the overlapping part 310 and protruding outward at the boundary of the electrode plates 110 and 130. The protruding part 330 may be bonded to the cap assembly 30 illustrated in FIGS. 1 and 2. The protruding part 330 of the electrode tab 300 bonded to the negative electrode plate 110 may be bonded to the bottom part 14 of the can 12.

The overlapping part 310 may be bonded to the positive electrode uncoated region 145 in the positive electrode plate 130.

In an embodiment, the overlapping part 310 may be welded to the positive electrode uncoated region 145. For example, ultrasonic welding may be applied to weld the conductive wire 301 to the positive electrode uncoated region 145 with energy of ultrasonic vibrations.

By placing an ultrasonic horn (not shown) to overlap the overlapping parts 310 of the plurality of conductive wires 301 that overlap the positive electrode uncoated region 145, and applying pressure toward the positive electrode uncoated region 145 while operating the ultrasonic horn, the overlapping parts 310 of the conductive wires 301 may be melted and bonded to the positive electrode uncoated region 145 by energy of ultrasonic vibrations.

Ultrasonic welding using an ultrasonic horn may be advantageous in that the plurality of conductive wires 301 can be concurrently (e.g., simultaneously) welded to the positive electrode uncoated region 145, thereby improving working speed and reducing working costs.

Each of the conductive wires 301 may extend along a path that is longer than a shortest distance between a first side end 303 and a second side end 304 thereof in the longitudinal direction. The conductive wire 301 of the electrode tab 300 illustrated in FIGS. 7 to 9 extends along a wave path.

However, the wave path is provided as an example, and in other examples, the conductive wire 301 may extend along another type of path such as, for example, a zigzag path. In an embodiment, the plurality of conductive wires 301 may have a same size and shape such that the plurality of conductive wires 301 may be arranged side by side with a decreasing gap therebetween.

In an embodiment, an end part of the ultrasonic horn applied to the welding operation of the electrode tab 300 may have a narrow and long rectangular cross-sectional shape. In FIG. 8, a region indicated by a dash-double dotted line and designated by a reference numeral "H2" represents an ultrasonic horn region H2 in which the ultrasonic horn overlaps the plurality of conductive wires 301.

In the overlapping part 310, a size of a maximum width WM1 of the plurality of conductive wires 301 in the longitudinal direction of the positive electrode plate 130 is greater than a size of a width WH of the ultrasonic horn region H2.

However, as shown in FIG. 8, when the ultrasonic horn is placed to overlap the overlapping part 310 such that the ultrasonic horn region H2 is located at the center of the maximum width WM1 of the plurality of conductive wires 301, and when applying pressure toward the positive electrode uncoated region 145 while operating the ultrasonic horn, the plurality of wave-shaped conductive wires 301 may be concurrently (e.g., simultaneously) welded.

All of the conductive wires 301 can be concurrently (e.g., simultaneously) welded even when a sum of diameters of the plurality of conductive wires 301 is larger than the size of the width WH of the ultrasonic horn region H2.

Accordingly, compared to the electrode tab 200 according to the previous example, in the electrode tab 300 according to the present example, a larger number of conductive wires 301 can be welded concurrently (e.g., simultaneously), which increases an electrical capacity of the electrode tab 300 and allows charging and discharging to proceed more stably. In addition, the speed and productivity of the welding operation of the electrode tab 300 may be improved.

However, the ultrasonic welding is provided as an example of a method of bonding the conductive wires 301 to the positive electrode uncoated region 145. In another embodiment, the conductive wires 301 may be bonded to the positive electrode uncoated region 145 by another method, such as attaching the plurality of conductive wires 301 one by one to the positive electrode uncoated region 145 by laser welding.

In an embodiment, any conductive wire 301 may not be bonded to another adjacent conductive wire 301.

In an embodiment, the electrode tab 300 bonded to the positive electrode plate 130 may be bonded to the positive electrode inner side surface 136 of the positive electrode uncoated region 145, and the electrode tab 300 bonded to the negative electrode plate 110 may be bonded to the negative electrode inner side surface 116 of the negative electrode uncoated region 125.

When the electrode plates 110 and 130 are bent during winding of the electrode assembly 100, or when the electrode plates 110 and 130 are expanded during charging and discharging of the secondary battery 10, in the electrode tab 300 according to the present example, the conductive wires 301 are spaced apart from each other or a gap therebetween is reduced, thereby mitigating stress on the electrode plates 110 and 130 caused by the electrode tab 300.

In an embodiment, the electrode plates 110 and 130 come into contact with and press the curved outer circumferential surface of the conductive wire 301 having a circular or circular-like cross-sectional shape, and the stress on the electrode plates 110 and 130 caused by the electrode tab 300 is mitigated. Accordingly, cracking of the electrode plates 110 and 130 due to close contact with the electrode tab 300 may be suppressed, and durability of the secondary battery 10 including the electrode assembly 100 may be improved.

The overlapping part 310 may include a welding part W2 welded to the positive electrode uncoated region 145 of the positive electrode plate 130 by the above-described ultrasonic welding operation and a free part FR1 not welded to the positive electrode uncoated region 145 by the above-described ultrasonic welding operation. Similarly, when the electrode tab 300 is bonded to the negative electrode plate 110, the overlapping part 310 may include the welding part W2 welded to the negative electrode uncoated region 125 of the negative electrode plate 110 and the free part FR1 not welded to the negative electrode uncoated region 125.

Since the free part FR1 is not fixed to the electrode plates 110 and 130, when the electrode plates 110 and 130 are wound or expanded, the free part FR1 may move more freely than the welding part W2 in a direction that avoids or mitigates a pressure causing the free part FR1 to come into close contact with the electrode plates 110 and 130. Accordingly, the pressure applied to the electrode plates 110 and 130 by the electrode tab 300 may be mitigated to a greater extent, and a phenomenon of cracking of the electrode plates 110 and 130 may be more reliably prevented.

In FIG. 9, the electrode tab 300 is illustrated as being bonded to the positive electrode inner side surface 136, but is not limited thereto, and may be bonded to the negative electrode inner side surface 116, or may be bonded to the positive electrode outer side surface 138 or the negative electrode outer side surface 118.

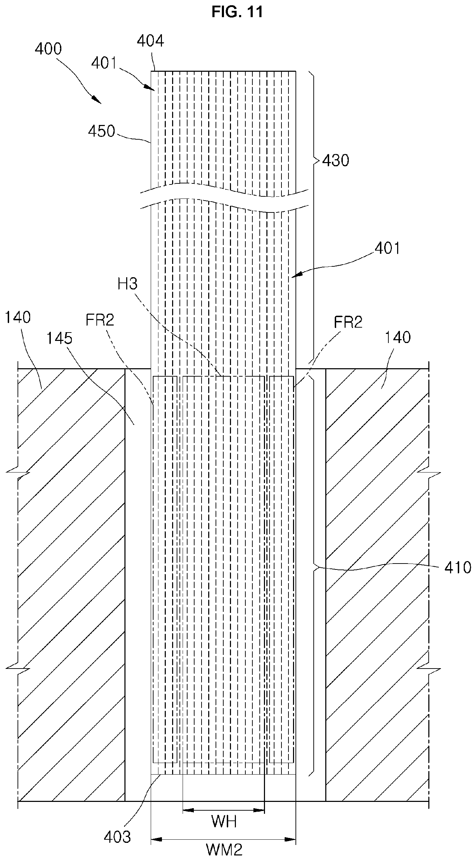

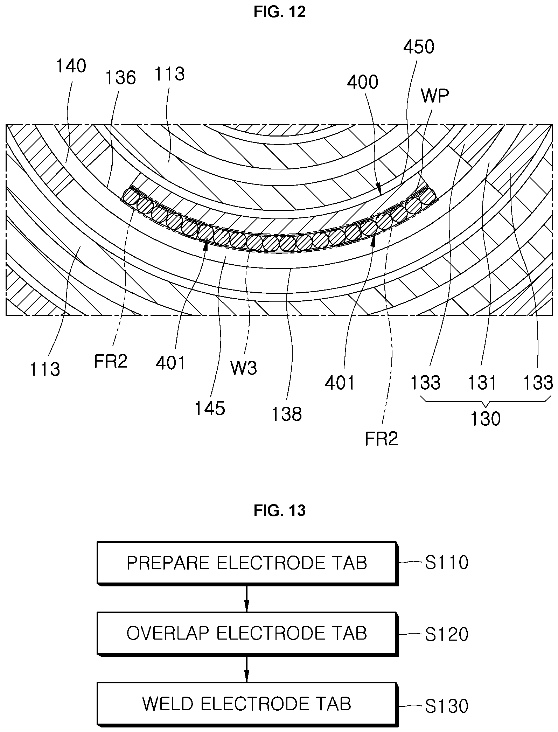

FIG. 10 is a perspective view illustrating another example of the electrode tab included in the electrode assembly of the present disclosure; FIG. 11 is an enlarged plan view of the electrode tab of FIG. 10 and a part of the electrode plate to which the electrode tab is attached; and FIG. 12 is an enlarged cross-sectional view of a part of an electrode assembly according to another embodiment of the present disclosure wound in a jelly roll shape.

Referring to FIGS. 3 and 10 to 12, an electrode tab 400 according to the present example may be included in the electrode assembly 100, rather than the electrode tab 200 according to the example shown in FIGS. 3 and 4. The electrode tab 400 includes a plurality of conductive wires 401 arranged side by side in a width direction thereof and a reinforcing thin plate 450. Herein, a case in which the electrode tab 400 is bonded to the positive electrode plate 130 will be described as an example, but the electrode tab 400 may be similarly applied to the negative electrode plate 110.

A conductive wire 401 may be formed of, for example, an aluminum or aluminum alloy material. However, the conductive wire 401 may be formed of another type of electrically conductive metal materials other than aluminum and an aluminum alloy.

In an embodiment, a cross-sectional shape of the conductive wire 401 may be a circular shape with a constant diameter. However, the cross-sectional shape of the conductive wire 401 may be a polygonal shape of a pentagon or more sides.

The plurality of conductive wires 401 may be arranged side by side in the width direction perpendicular to a longitudinal direction thereof. The plurality of conductive wires 401 may be arranged back-to-back such that outer circumferential surfaces thereof are in contact with each other, or may be arranged to be spaced apart such that a fine gap is formed between the adjacent conductive wires 401. The width direction of the conductive wire 401 may be the same as the longitudinal direction of the positive electrode plate 130 and the negative electrode plate 110.

The conductive wire 401 includes an overlapping part 410 that overlaps the electrode plates 110 and 130 to be bonded to the electrode plates 110 and 130, and a protruding part 430 connected to the overlapping part 410 and protruding outward at the boundary of the electrode plates 110 and 130.

The protruding part 430 may be bonded to the cap assembly 30 illustrated in FIGS. 1 and 2, and the protruding part 430 of the electrode tab 400 bonded to the negative electrode plate 110 may be bonded to the bottom part 14 of the can 12.

The overlapping part 410 may be bonded to the positive electrode uncoated region 145 in the positive electrode plate 130.

In an embodiment, the overlapping part 410 may be welded to the positive electrode uncoated region 145. For example, ultrasonic welding may be applied to weld the conductive wire 401 to the positive electrode uncoated region 145 with energy of ultrasonic vibrations.

The reinforcing thin plate 450 is bonded to the plurality of conductive wires 401 and is not bonded to the electrode plates 110 and 130. The reinforcing thin plate 450 may be formed of, for example, an aluminum or aluminum alloy material similar to the conductive wire 401. However, the reinforcing thin plate 450 may be formed of another type of electrically conductive metal material other than aluminum and an aluminum alloy. A thickness of the reinforcing thin plate 450 may be of a similar size to a thickness of each of the substrates 111 and 113 of the electrode plates 110 and 130.

All of the conductive wires 401 may be bonded to the reinforcing thin plate 450. In an embodiment, the conductive wires 401 may be bonded to the reinforcing thin plate 450 by welding. In FIG. 12, a region indicated by a dash-double dotted line and designated by a reference designator "WP" represents a reinforcing thin plate welding part WP in which the reinforcing thin plate 450 and the plurality of conductive wires 401 are welded.

The overlapping parts 410 of some conductive wires 401 of the plurality of conductive wires 401 may not be bonded to the electrode plates 110 and 130. For example, the overlapping parts 410 of the plurality of conductive wires 401 face the positive electrode uncoated region 145 of the positive electrode plate 130, and the electrode tab 400 may be placed on the positive electrode uncoated region 145 such that the plurality of conductive wires 401 are interposed between the reinforcing thin plate 450 and the positive electrode uncoated region 145.

In an embodiment, the overlapping part 410 of at least one conductive wire 401 of the plurality of conductive wires 401 may be welded to the positive electrode uncoated region 145 while the reinforcing thin plate 450 is spaced apart from the positive electrode plate 130.

By placing an ultrasonic horn (not shown) to overlap a part of the reinforcing thin plate 450, which overlaps the positive electrode plate 130, and applying pressure toward the positive electrode uncoated region 145 while operating the ultrasonic horn, the overlapping parts 410 of the conductive wires 401 may be melted and bonded to the positive electrode uncoated region 145 by energy of ultrasonic vibrations passing through the reinforcing thin plate 450.

Ultrasonic welding using an ultrasonic horn may be advantageous in that the plurality of conductive wires 401 can be concurrently (e.g., simultaneously) welded to the positive electrode uncoated region 145, thereby improving working speed and reducing working costs.

In an embodiment, the plurality of conductive wires 401 may have a same size and shape such that the plurality of conductive wires 401 may be arranged side by side with a decreasing gap therebetween. In an embodiment, each of the conductive wires 401 may extend along a straight path parallel to the others.

In an embodiment, an end part of the ultrasonic horn applied to the welding operation of the electrode tab 400 may have a narrow and long rectangular cross-sectional shape. In FIG. 11, a region indicated by a dash-double dotted line and designated by a reference numeral "H3" represents an ultrasonic horn region H3 in which the ultrasonic horn overlaps the plurality of conductive wires 401.

As shown in FIG. 12, in the overlapping part 410, when a size of a maximum width WM2 of the plurality of conductive wires 401 in the longitudinal direction of the positive electrode plate 130 is greater than a size of a width WH of the ultrasonic horn region H3, only some conductive wires 401 of the plurality of conductive wires 401 may be welded to the positive electrode plate 130, and the remaining conductive wires 401 may not be welded to the positive electrode plate 130.

However, since all of the conductive wires 401 are welded to the reinforcing thin plate 450, the electrode tab 400 may be reliably welded to the positive electrode plate 130. In other words, even when a sum of diameters of the plurality of conductive wires 401 is larger than the width WH of the ultrasonic horn region H3, the electrode tab 400 may be firmly welded to the positive electrode uncoated region 145 of the positive electrode plate 130.

Accordingly, compared to the electrode tab 200 according to the example of FIGS. 4 to 6, the electrode tab 400 according to the present example can have a larger number of conductive wires 401, which increases an electrical capacity of the electrode tab 400 and allows charging and discharging to proceed more stably.

In an embodiment, any conductive wire 401 may not be bonded to another adjacent conductive wire 401.

In an embodiment, the electrode tab 400 bonded to the positive electrode plate 130 may be bonded to the positive electrode inner side surface 136 of the positive electrode uncoated region 145, and the electrode tab 400 bonded to the negative electrode plate 110 may be bonded to the negative electrode inner side surface 116 of the negative electrode uncoated region 125.

When the electrode plates 110 and 130 are bent during winding of the electrode assembly 100, or when the electrode plates 110 and 130 are expanded during charging and discharging of the secondary battery 10, in the electrode tab 400 according to the present example, the conductive wires 401 are spaced apart from each other or a gap therebetween is reduced, thereby mitigating stress on the electrode plates 110 and 130 caused by the electrode tab 400.

In an embodiment, the electrode plates 110 and 130 come into contact with and press a curved outer circumferential surface of the conductive wire 401 having a circular or circular-like cross-sectional shape, and the stress on the electrode plates 110 and 130 caused by the electrode tab 400 is mitigated. Accordingly, cracking of the electrode plates 110 and 130 due to close contact with the electrode tab 400 may be suppressed, and durability of the secondary battery 10 including the electrode assembly 100 may be improved.

The overlapping part 410 may include a welding part W3 welded to the positive electrode uncoated region 145 of the positive electrode plate 130 by the above-described ultrasonic welding operation and a free part FR2 not welded to the positive electrode uncoated region 145 by the above-described ultrasonic welding operation. Similarly, when the electrode tab 400 is bonded to the negative electrode plate 110, the overlapping part 410 may include the welding part W3 welded to the negative electrode uncoated region 125 of the negative electrode plate 110 and the free part FR2 not welded to the negative electrode uncoated region 125.

Since the free part FR2 is not fixed to the electrode plates 110 and 130, when the electrode plates 110 and 130 are wound or expanded, the free part FR2 may move more freely than the welding part W3 in a direction that avoids or mitigates a pressure causing the free part FR2 to come into close contact with the electrode plates 110 and 130. Accordingly, the pressure applied to the electrode plates 110 and 130 by the electrode tab 400 may be mitigated to a greater extent, and a phenomenon of cracking of the electrode plates 110 and 130 may be more reliably prevented.

In FIGS. 10 and 12, the electrode tab 400 is illustrated as being bonded to the positive electrode inner side surface 136, but is not limited thereto, and may be bonded to the negative electrode inner side surface 116, or may be bonded to the positive electrode outer side surface 138 or the negative electrode outer side surface 118.

FIG. 13 is a flowchart illustrating a method for fabricating the electrode assembly according to an embodiment of the present disclosure. Referring to FIGS. 3, 5, and 8, the method for fabricating the electrode assembly according to the present embodiment of the present disclosure may include preparing an electrode tab (S110), overlapping the electrode tab (S120), and welding the electrode tab (S130).

The preparing of the electrode tab (S110) is an operation of preparing electrode tabs 200 and 300 respectively including a plurality of conductive wires 201 and a plurality of conductive wires 301 arranged side by side in a width direction. The overlapping of the electrode tab (S120) is an operation of placing some of the electrode tabs 200 and 300 in a longitudinal direction, i.e., overlapping parts 210 and 310 to overlap the electrode plates 110 and 130.

The welding of the electrode tab (S130) is an operation of welding some of the electrode tabs 200 and 300, i.e., the overlapping parts 210 and 310 to the electrode plates 110 and 130. The welding of the electrode tab (S130) may include welding the conductive wires 201 and 301 to the electrode plates 110 and 130 with energy of ultrasonic vibrations.

Further detailed configurations of the preparing of the electrode tab (S110), the overlapping of the electrode tab (S120), and the welding of the electrode tab (S130) have been already described in the disclosure for the configurations of the electrode tab 200 according to the example of FIGS. 4 to 6 and the configuration of the electrode tab 300 according to the example of FIGS. 7 to 9, and, thus, repeated descriptions will be omitted.

The method for fabricating the electrode assembly according to an embodiment of the present disclosure may further include overlapping the positive electrode plate 130 and the negative electrode plate 110, to which the electrode tab 200 or 300 is bonded, such that the separator 101 is interposed therebetween and winding the overlapping positive electrode plate 130, negative electrode plate 110, and separator 101, after the welding of the electrode tab (S130).

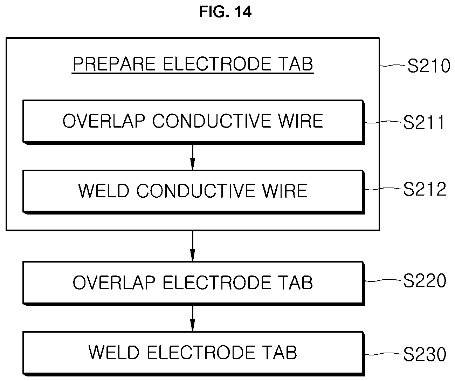

FIG. 14 is a flowchart illustrating a method for fabricating the electrode assembly according to another embodiment of the present disclosure. Referring to FIGS. 3 and 11, the method for fabricating the electrode assembly according to the present embodiment of the present disclosure may include preparing an electrode tab (S210), overlapping the electrode tab (S220), and welding the electrode tab (S230).

The preparing of the electrode tab (S210) is an operation of preparing an electrode tab 400 including a plurality of conductive wires 401 arranged side by side in a width direction. The preparing of the electrode tab (S210) may include overlapping the conductive wire (S211) and welding the conductive wire (S212).

The overlapping of the conductive wire (S211) is an operation of arranging the plurality of conductive wires 401 side by side in the width direction and placing the plurality of conductive wires 401 to overlap a reinforcing thin plate 450. The welding of the conductive wire (S212) is an operation of welding the conductive wires 401 to the reinforcing thin plate 450. In an embodiment, in the welding of the conductive wire (S212), all of the conductive wires 401 may be welded to the reinforcing thin plate 450.

The overlapping of the electrode tab (S220) is an operation of placing a portion of the electrode tab in a longitudinal direction of the electrode tab 400, i.e., some of the plurality of conductive wires 401 including the overlapping parts 410 to overlap the electrode plates 110 and 130.

In the overlapping of the electrode tab (S220), the electrode tab 400 is placed on the electrode plates 110 and 130 such that the plurality of conductive wires 401 face the electrode plates 110 and 130 and the plurality of conductive wires 401 are interposed between the reinforcing thin plate 450 and the electrode plates 110 and 130.

The welding of the electrode tab (S230) is an operation of welding a part of the electrode tab 400, that is, the overlapping parts 410 to the electrode plates 110 and 130. In an embodiment, the welding of the electrode tab (S230) may include welding the conductive wires 401 to the electrode plates 110 and 130 with energy of ultrasonic vibrations.

In the welding of the electrode tab (S230), the conductive wires 401 may be welded to the electrode plates 110 and 130 while the reinforcing thin plate 450 is spaced apart from the electrode plates 110 and 130. In an embodiment, in the welding of the electrode tab (S230), some conductive wires 401 of the plurality of conductive wires 401 may not be bonded to the electrode plates 110 and 130.

Further detailed configurations of the preparing of the electrode tab (S210), the overlapping of the electrode tab (S220), and the welding of the electrode tab (S230) have been already described in the disclosure for the configurations of the electrode tab 400 according to the example of FIGS. 10 to 12, and, thus, repeated descriptions will be omitted.

The method for fabricating the electrode assembly according to the second embodiment of the present disclosure may further include overlapping the positive electrode plate 130 and the negative electrode plate 110, to which the electrode tab 400 is bonded, such that the separator 101 is interposed therebetween and winding the overlapping positive electrode plate 130, negative electrode plate 110, and separator 101, after the welding of the electrode tab (S230).

According to one or more embodiments of the present disclosure, when an electrode plate is bent during winding of an electrode assembly, or when the electrode plate is expanded during charging and discharging, a plurality of conductive wires are spaced apart from each other or a gap therebetween is reduced, such that stress on the electrode plate caused by an electrode tab can be mitigated.

Further, in one or more embodiments, the electrode plate comes into contact with and presses a curved outer circumferential surface of the conductive wire, such that stress on the electrode plate caused by the electrode tab can be mitigated. Accordingly, cracking of the electrode plate due to close contact with the electrode tab can be suppressed, and durability of a secondary battery including the electrode assembly can be improved.

Although the present invention has been described with reference to embodiments and drawings illustrating aspects thereof, the present invention is not limited thereto. Various modifications and variations can be made by a person skilled in the art to which the present invention belongs within the scope of the present invention.

## Claims

1. An electrode assembly (100) comprising:
a pair of electrode plates (110, 130);
a separator (101) between the pair of electrode plates (110, 130); and
an electrode tab (200, 300, 400) comprising a plurality of conductive wires (201, 301, 401) arranged side by side in a width direction,
wherein each of the plurality of conductive wires (201, 301, 401) comprises:
an overlapping part (210, 310, 410) that overlaps an electrode plate (110, 130) of the pair of electrode plates (110, 130) to be bonded to an electrode plate (110, 130) of the pair of electrode plates (110, 130), and
a protruding part (230, 330, 430) connected to the overlapping part (210, 310, 410) and protruding from a boundary of the electrode plates (110, 130) to an outside of the electrode plates (110, 130).

2. The electrode assembly (100) as claimed in claim 1, wherein the pair of electrode plates (110, 130) comprises a positive electrode plate (130) and a negative electrode plate (110) having opposite polarities, and
the overlapping part (210, 310, 410) is bonded to the positive electrode plate (130).

3. The electrode assembly (100) as claimed in claim 1 or 2, wherein each of the electrode plates (110, 130) comprises a substrate (111, 113) and an active material applied to the substrate (111, 113), and
the overlapping part (210, 310, 410) is bonded to an uncoated region of the electrode plate (110, 130), to which the active material is not applied.

4. The electrode assembly (100) as claimed in any of the preceding claims, wherein the pair of electrode plates (110, 130) and the separator (101) are wound around a winding axis,
each of the electrode plates (110, 130) comprises an inner side surface facing the winding axis, and an outer side surface opposite to the winding axis, and
the electrode tab (200, 300, 400) is bonded to the inner side surface.

5. The electrode assembly (100) as claimed in any of the preceding claims, wherein the conductive wires (201, 301, 401) extend along a path that is longer than a shortest distance between a first side end (203, 303) and a second side end (204, 304) in a longitudinal direction.

6. The electrode assembly (100) as claimed in any of the preceding claims, wherein the overlapping part (210, 310, 410) comprises a welding part welded to the electrode plate (110, 130) and a free part not welded to the electrode plate (110, 130).

7. The electrode assembly (100) as claimed in any of the preceding claims, wherein the electrode tab (200, 300, 400) further comprises a reinforcing thin plate (450) bonded to the plurality of conductive wires (201, 301, 401) and not bonded to the electrode plate (110, 130).

8. The electrode assembly (100) as claimed in any of the preceding claims, wherein the conductive wires (201, 301, 401) have a cross-section of a circular shape.

9. The electrode assembly (100) as claimed in any of the preceding claims, wherein the conductive wires (201, 301, 401) are made of aluminum or an aluminum alloy.

10. A method for fabricating an electrode assembly (100) of any of the preceding claims, the method comprising:
preparing an electrode tab (200, 300, 400), the electrode tab (200, 300, 400) comprising a plurality of conductive wires (201, 301, 401) arranged side by side in a width direction;
overlapping the electrode tab (200, 300, 400) such that a part of the electrode tab (200, 300, 400) in a longitudinal direction is placed to overlap an electrode plate (110, 130); and
welding the electrode tab (200, 300, 400) such that the part of the electrode tab (200, 300, 400) is welded to the electrode plate (110, 130).

11. The method as claimed in claim 10, wherein the preparing of the electrode tab (200, 300, 400) comprises:
overlapping the conductive wires (201, 301, 401) such that the plurality of conductive wires (201, 301, 401) are arranged side by side in the width direction and placed to overlap a reinforcing thin plate (450); and
welding the conductive wires (201, 301, 401) such that the conductive wires (201, 301, 401) are welded to the reinforcing thin plate (450).

12. The method as claimed in claim 10 or 11, wherein, in the welding of the conductive wires (201, 301, 401), all of the conductive wires (201, 301, 401) are bonded to the reinforcing thin plate (450), and
in the welding of the electrode tab (200, 300, 400), some of the plurality of conductive wires (201, 301, 401) are not bonded to the electrode plate (110, 130).

13. The method as claimed in any of claims 10 to 12, wherein the welding of the electrode tab (200, 300, 400) comprises welding the conductive wires (201, 301, 401) to the electrode plate (110, 130) with ultrasonic vibrations.

14. A secondary battery (10) comprising:
a case; and
an electrode assembly (100) of any of claims 1 to 9, the electrode assembly (100) being inserted in the case.

15. The secondary battery (10) as claimed in claim 14, wherein the case comprises:
a cylindrical can (12) having a side open and the electrode assembly (100) inserted therein; and
a cap assembly (30) arranged to face the open side of the can (12).
